# EUROPÄISCHE PATENTSCHRIFT

(11) **EP 3 919 715 B1**
(45) Veröffentlichungstag und Bekanntmachung des Hinweises auf die Patenterteilung: **01.05.2024**
(21) Anmeldenummer: 20177762.0
(22) Anmeldetag: 02.06.2020
(51) Int. Cl.: E06B 9/13, E06B 9/58

(54) **TOR, INSBESONDERE EIN SCHNELLLAUFROLLTOR**
DOOR, IN PARTICULAR A QUICK-ACTION ROLLING DOOR
PORTAIL, EN PARTICULIER UN PORTAIL À ENROULEMENT RAPIDE

(43) Veröffentlichungstag der Anmeldung: 08.12.2021
(73) Patentinhaber: Frinova GmbH, 23689 Pansdorf (DE)
(72) Erfinder: Dück, Wilhelm, 23560 Lübeck (DE)
(74) Vertreter: Patentanwälte Hemmer Lindfeld Frese Partnerschaft mbB

(56) Entgegenhaltungen:
- GB-A- 499 880
- GB-A- 2 142 683
- NL-C2- 1 025 507

## Beschreibung

Die Erfindung betrifft ein Tor, insbesondere ein Schnelllaufrolltor mit den im Oberbegriff des Anspruchs 1 angegebenen Merkmalen.

Derartige Tore mit vertikaler Laufrichtung des Torblatts sind in zahlreichen Ausführungsvarianten bekannt. Es wird in diesem Zusammenhang auf EP 1 760 237 A2, EP 0 816 624 B1 oder EP 1 847 673 A1 verwiesen.

Die Erfindung geht aus von einem Stand der Technik wie er aus WO 2016/119836 A1 bekannt ist. Diese Konstruktion hat sich bestens bewährt, aufgrund des vergleichsweise leichten aber flexiblen Torblatts können hohe Öffnungs- und Schließgeschwindigkeiten realisiert werden, was insbesondere zum Verschließen von Kühlräumen oder Tiefkühlräumen von Vorteil ist, die einerseits eine gute Zugänglichkeit gewähren müssen, andererseits jedoch aufgrund der Temperaturunterschiede zwischen dem Rauminneren und der Umgebung nur so kurz wie möglich geöffnet sein sollten. Dabei zählt nicht nur die Zeit, in welcher das Tor geöffnet ist, sondern insbesondere auch die Zeit, in welcher das Tor öffnet bzw. wieder schließt. In dieser Zeit ist ein Zugang nicht gewährleistet, der zu vermeidende Wärmeaustausch jedoch gegeben. Es ist deshalb ein stetes Ziel, die Öffnungs- und Schließzeiten so kurz wie möglich zu halten, was in der Praxis nur mit Schnelllaufrolltoren realisierbar ist, die ein vergleichsweise geringes Eigengewicht haben und deren flexibles Torblatt mit vertikaler Laufrichtung aufwickelbar ist.

Dabei kommt es insbesondere bei der Verwendung in Kühlräumen oder Tiefkühlräumen nicht nur auf das schnelle Öffnen und Schlie-ßen des Tores an, sondern auch auf den dichten Abschluss. Hierzu ist es bekannt, das Torblatt magnetisch am Rahmen zu fixieren, in Nuten zu führen oder spezielle Dichtungen vorzusehen. Ein Problem dabei ist, dass mit zunehmender Dichtheit des Tores auch die Kräfte wachsen, die zum Öffnen erforderlich sind, um das dichtend am Rahmen anliegende Torblatt durch Aufwickeln öffnen zu können. Häufig dienen derartige Tore jedoch nicht nur dem Zugang zu dem Kühlraum, Tiefkühlraum oder dergleichen, sondern müssen auch Brandschutzvorschriften erfüllen. Dann jedoch ist es erforderlich, dass der dichte Abschluss des geschlossenen Tores auch unter erhöhter Temperatur und Flammeinwirkung von Innen standhalten muss.

Aus NL 1025507 C2 ist ein Tor mit einem aufwickelbaren Torblatt bekannt. An dem Tor ist eine Andrückvorrichtung vorgesehen, mit welcher das Torblatt gegen einen Rahmen gedrückt werden kann. Zur Bewegung der Andrückvorrichtung sind Zylinder vorgesehen. Diese erfordern eine zusätzliche Druckversorgung und Steuerung der Zylinder, um die Andrückvorrichtung in der Schließstellung gegen das Torblatt zu bewegen.

Vor diesem Hintergrund liegt der Erfindung die Aufgabe zugrunde, ein Tor, insbesondere ein Schnelllaufrolltor der eingangs genannten Art so auszubilden, dass bei einfachem konstruktivem Aufbau einerseits ein schnelles Öffnen und Schließen möglich ist, andererseits jedoch ein dichter Abschluss bei geschlossenem Tor gewährleistet ist, das insbesondere auch Brandschutzvorschriften erfüllen kann.

Diese Aufgabe wird gemäß der Erfindung durch ein Tor mit den in Anspruch 1 angegebenen Merkmalen erfüllt. Vorteilhafte Ausgestaltungen der Erfindung ergeben sich aus den Unteransprüchen, der nachfolgenden Beschreibung und den Zeichnungen.

Bei dem erfindungsgemäßen Tor, insbesondere einem Schnelllaufrolltor, handelt es sich um ein solches mit einem flexiblen Torblatt mit vertikaler Laufrichtung. Dieses Tor ist zum Verschließen einer durch einen Torrahmen begrenzten Toröffnung vorgesehen und weist einen Antrieb zum Öffnen und Schließen des Tores auf. Gemäß der Erfindung ist eine Andrückvorrichtung vorgesehen, mit welcher das Torblatt in seiner Schließstellung zum Torrahmen hin andrückbar ist.

Grundgedanke der vorliegenden Erfindung ist es, ein an sich bekanntes und bewährtes Tor, insbesondere Schnelllaufrolltor, wie es insbesondere zum Verschließen von Kühlräumen, Tiefkühlräumen und dergleichen aber auch anderen Räumen eingesetzt wird, durch eine Andrückvorrichtung so auszugestalten, dass das Tor in seiner Schließstellung in Richtung zum Torrahmen, also in Richtung zum Inneren des zu verschließenden Raumes andrückbar ist, so dass eine flächige und zuverlässige Abdichtung des geschlossenen Tores, also des Torblattes gegenüber dem Torrahmen gewährleistet ist. Eine solche Andrückvorrichtung kann mit vergleichsweise einfachem konstruktivem Aufwand realisiert werden und bei geeigneter Auslegung schnell aktiviert und deaktiviert werden, so dass die Öffnungs- und Schließzeiten des Tores dadurch nicht wesentlich verlängert werden. Andererseits ist es jedoch möglich, bei geeigneter Ausgestaltung der Andrückvorrichtung ein solches Rolltor mit flexiblen Torblatt so auszugestalten, dass dieses auch insbesondere Brandschutzvorschriften erfüllen kann.

Die erfindungsgemäße Ausgestaltung ist insbesondere für Schnelllaufrolltore geeignet, kann jedoch grundsätzlich auch bei anderen Toren mit flexiblem Torblatt Verwendung finden.

Unter Schnelllaufrolltor im Sinne der Erfindung sind Rolltore zu verstehen, deren Torblatt mit einer Geschwindigkeit von mindestens einem Meter pro Sekunde öffnet bzw. schließt.

Unter flexiblem Torblatt im Sinne der Erfindung ist typischerweise ein im Wesentlichen aus textilen Materialien aufgebautes Torblatt zu verstehen, welches eine gewisse Eigenstabilität aufweist, um die Toröffnung flächig zu verschließen, andererseits jedoch aufwickelbar ist und vorzugsweise so gestaltet ist, dass bei Kollision mit einem Gabelstapler oder anderem Fahrzeug das Torblatt nachgibt und sich anschließend selbsttätig wieder in die bestimmungsgemäße plane Ausgangslage zurückverformt. Grundsätzlich kann ein flexibles Torblatt im Sinne der vorliegenden Erfindung auch ein segmentiertes Torblatt sein, typischerweise werden jedoch in geeigneter Materialwahl und Abstimmung textile Dämmstoffe, Gewebe und Gewirke miteinander verbunden, die eine vergleichsweise hohe Flexibilität in Aufwickelrichtung und eine geringere Flexibilität in Querrichtung dazu aufweisen. Die verwendeten Stoffe sind dem Verwendungszweck angepasst, das heißt bei Einsatz in einem Kühl- oder Tiefkühlraum hoch wärmeisolierend. Bei Verwendung im Brandschutz sind diese gegebenenfalls auch zusätzlich mit weiteren Stoffen oder Beschichtungen versehen, welche die besonderen Anforderungen an Brandschutz und Feuerschutz erfüllen. Im Extremfall handelt es sich um ein Schnelllaufrolltor für einen Tiefkühlraum, welches darüber hinaus auch die Anforderungen an Feuerschutz und Brandschutz erfüllt, wie sie in einschlägigen Normen definiert sind.

Unter Tor im Sinne der vorliegenden Erfindung ist eine verschließbare Öffnung zu verstehen. Der Verschluss erfolgt durch ein flexibles Torblatt mit vertikaler Laufrichtung, welches typischerweise oberhalb des Tores zu einem Torblattwickel aufwickelbar ist. Torrahmen im Sinne der Erfindung muss nicht notwendigerweise ein gesondertes Bauteil sein, sondern kann die Begrenzung der Toröffnung darstellen, wenn beispielsweise die Toröffnung in einer Betonwand vorgesehen ist. Der Torrahmen kann jedoch zusätzlich durch Metall oder andere Bauteile stabilisiert und abgeschlossen sein. Das erfindungsgemäße Tor ist typischerweise so angeordnet, dass das Torblatt die Toröffnung bzw. den Torrahmen seitlich überragt, es kann jedoch auch, je nach Ausgestaltung, eine abgestufte Öffnung vorgesehen sein, so dass das Torblatt im Bereich des Torrahmens innerhalb der Toröffnung verläuft.

Um einerseits eine hohe Flexibilität des Torblattes haben zu können, andererseits aber einen dichten Abschluss des Torblattes gegenüber dem Torrahmen gewährleisten zu können, ist die Andrückvorrichtung mit einem Andrückrahmen ausgestattet, welcher das Torblatt in seiner Schließstellung mindestens an Abschnitten der beiden vertikal verlaufenden Seitenbereiche des Torblattes überdeckt. Durch einen solchen eigenstabilen Andrückrahmen wird das Torblatt zumindest an den Seitenbereichen, je nach Ausgestaltung gegebenenfalls auch vollumfänglich quasi zwischen dem Andrückrahmen und dem Torrahmen eingespannt und dadurch kraftschlüssig und dichtend fixiert.

Grundsätzlich ist es denkbar, den Andrückrahmen durch eine geeignete Hebelvorrichtung manuell zu betätigen. Im Zuge eines möglichst schnellen automatisierten Ablaufes des Öffnungs- bzw. Schließvorganges des Tores ist es jedoch zweckmäßig und vorteilhaft, eine elektromotorische, pneumatische oder hydraulische Steuerung vorzusehen, die dieses bewirkt. Alternativ kann die Andrückkraft des Andrückrahmens durch Federkraft erzeugt sein, dann kann in kinematischer Umkehr eine elektromotorische, pneumatische oder hydraulische Steuerung vorgesehen sein, um den Andrückrahmen zum Zwecke des Öffnens und Schließens des Tores vom Torrahmen wegzubewegen. Dabei ist der Andrückrahmen typischerweise linear und senkrecht bewegbar zum Torrahmen, das heißt sein Abstand gegenüber dem Torrahmen verändert sich überall am Andrückrahmen in gleicher Weise. Hierzu kann eine entsprechende Lagerung beispielsweise in den Seitenbereichen vorgesehen sein. Alternativ kann der Andrückrahmen schwenkbar angeordnet sein, wobei die Schwenkachse bodennah sein sollte, vorzugsweise unterhalb des Bodens liegen sollte, um auch im unteren Bereich zum Öffnen des Tores einen gewissen Abstand des Andrückrahmens zum Torrahmen zu ermöglichen.

Besonders vorteilhaft ist es, wenn auf einen gesonderten Antrieb für den Andrückrahmen verzichtet wird und dieser Andrückrahmen über die Bewegung des Torblattes erfolgt, also über den ohnehin vorhandenen Antrieb zum Auf- und Abwickeln des Torblattes.

Es kann jedoch auch vorteilhaft sein, Antriebsmittel vorzusehen, mit welchen der Andrückrahmen in Richtung zum Torrahmen bewegbar und kraftbeaufschlagbar ist. Damit kann das Torblatt, nachdem es seine Schließstellung erreicht hat, ebenfalls nicht nur durch den Andrückrahmen dicht an den Torrahmen angelegt werden, sondern durch Kraftbeaufschlagung auch kraftschlüssig an diesen angelegt werden, was insbesondere für Brandschutzerfordernisse von Vorteil ist, wo aufgrund der starken Temperatur und möglicherweise auch Druckdifferenzen durchaus höhere Kräfte auftreten können, welche auf das Torblatt wirken und welche letztlich durch den Andruckrahmen aufgenommen werden.

Aus Gründen der Stabilität ist ein Andrückrahmen zu bevorzugen, welcher geschlossen ausgebildet ist und somit typischerweise eine rechteckige Form hat und somit das Torblatt an allen vier Seiten, sofern vorhanden, an den Torrahmen andrücken kann. Eine solche Anordnung ist insbesondere für Tore vorteilhaft, bei denen beispielsweise ein Förderband vorgesehen ist, welches das geöffnete Tor durchsetzt. Soll hingegen das Tor begehbar oder durch einen Hubwagen oder Gabelstapler durchfahrbar sein, dann ist entweder auf den unteren horizontalen Querbalken des Andrückrahmens zu verzichten oder aber dieser in eine bodenseitige Fuge einzugliedern, so dass er bei geöffnetem Torblatt überfahrbar ist.

Vorteilhaft kann der Andrückrahmen jedoch auch nur u-förmig ausgebildet sein, das heißt zwei vertikal verlaufende Abschnitte aufweisen, die durch einen horizontalen Abschnitt an der Oberseite miteinander verbunden sind. Ein solcher nach unten offener u-förmiger Andrückrahmen wird das Torblatt in geschlossener Stellung ausreichend gegenüber dem Torrahmen fixieren und andrücken, ist jedoch in geöffneter Stellung des Torblattes ohne Weiteres durchfahrbar.

Um sicherzustellen, dass das flexible Torblatt, welches oberhalb des Torrahmens zu einem Torblattwickel aufgewickelt ist, beim Verschließen stets in seiner bestimmungsgemäßen Lage mit geringem Abstand vor dem Torrahmen angeordnet ist, ist an der Oberseite des Andrückrahmens eine drehbar gelagerte Führungsrolle zur Umlenkung des Torblattes vorgesehen. Eine solche Umlenkrolle ist vorteilhaft horizontal über dem horizontalen Abschnitt des Andrückrahmens drehbar innerhalb der Andrückvorrichtung gelagert. Eine solche Umlenk- und Führungsrolle wird dazu genutzt, die Bewegung des Andrückrahmens durch die Bewegung des Torblattes zu steuern. Hierzu ist der Torblattwickel nicht nur oberhalb der Führungsrolle vorzusehen, sondern auch mit ausreichendem senkrechten Abstand zur Führungsrolle und zum Torrahmen, derart, dass beim Drehen des Torblattwickels in Aufwickelrichtung eine Querkraft in Richtung vom Torrahmen weg auf die Führungsrolle ausgeübt wird. Diese Querkraft kann dazu genutzt werden, beim Verfahren des Torblatts aus der geschlossenen Stellung zunächst den Andrückrahmen mit Hilfe dieser Querkraft aus seiner angedrückten Stellung vom Torrahmen wegzubewegen, um dann im Weiteren das Torblatt klemmkraftfrei nach oben bewegen und zu dem Torblattwickel aufwickeln zu können. Eine solche Anordnung, die weiter unten noch im Einzelnen beschrieben ist, hat den Vorteil, dass die Steuerung der Andrückvorrichtung durch das Torblatt und somit durch den Antrieb zum Aufwickeln des Torblattes gesteuert wird und somit kein gesonderter Antrieb für die Andrückvorrichtung erforderlich ist.

Um den Andrückrahmen in einer im Wesentlichen quer verlaufenden Richtung zum geschlossenen Torblatt zu bewegen, können alternativ Pneumatikzylinder, elektrische Linearantriebe, hydraulische Antriebe oder auch piezoelektrische Antriebe verwendet werden, die zwi schen dem Torrahmen und dem Andrückrahmen wirksam sind. Technisch besonders einfach, zuverlässig und robust hat sich ein Antrieb erwiesen, bei dem ein Spindeltrieb vorgesehen ist, welcher zwischen Andrückrahmen und Torrahmen wirksam ist und über den der Andrückrahmen zum Torrahmen hin bewegbar und kraftbeaufschlagbar ist.

Besonders vorteilhaft ist es, wenn mindestens zwei Spindeltriebe zu beiden Seiten des Torblatts, also rechts und links vorgesehen sind, um insbesondere die Vertikalbereiche zuverlässig anzudrücken und kraftschlüssig in der angedrückten Stellung zu halten. Vorteilhaft sind jedoch mehrere Spindeltriebe vorgesehen, bevorzugt vier Spindeltriebe jeweils in den Eckbereichen des Andrückrahmens, die synchron angetrieben sind.

Ein solcher Spindeltrieb besteht stets aus einer Spindel und einer Spindelmutter, von denen einer der Bauteile drehbar angetrieben ist, um eine Bewegung in Achsrichtung der Spindel zu erzeugen. Besonders vorteilhaft ist es, wenn die Antriebsspindeln drehbar im Andrückrahmen gelagert sind und in Spindelmuttern eingreifen, die torrahmenseitig fest angeordnet sind. Eine solche Anordnung ist auch fertigungstechnisch von Vorteil, da sämtliche rahmenseitig angeordneten Bauteile fabrikmäßig vorgefertigt und montiert werden können, wohingegen torrahmenseitige Bauteile entweder in den gesondert einzubauenden Torrahmen zu integrieren sind oder aber vor Ort anzubringen sind, was montagetechnisch stets aufwendiger ist.

Zum Antrieb der Antriebsspindeln ist gemäß einer vorteilhaften Weiterbildung der Erfindung zentral außen am Andrückrahmen ein Antriebsmotor vorgesehen, welcher sämtliche Spindeln synchron antreibt. Der synchrone Antrieb kann über ein Zahnradgetriebe, ein Kettengetriebe oder in anderer geeigneter Weise erfolgen, besonders vorteilhaft ist es, wenn ein Zahnriementrieb Verwendung findet, welcher den Antriebsmotor mit den Spindeltrieben antriebsverbindet. Derartige Zahnriementriebe sind kostengünstig verfügbar, sind laufruhig, langzeitstabil und gewährleisten aufgrund des Formschlusses einen synchronen Betrieb sämtlicher Spindeltriebe. Hierzu sind an den im Andrückrahmen drehbar gelagerten Antriebspindeln, die mit einem Ende in den torrahmenseitig angeordneten Spindelmuttern angeordnet sind, an den rückseitigen freien anderen Enden Zahnräder in Form von Stirnrädern angeordnet, welche von einem gemeinsamen Zahnriemen zusammen mit dem Antriebsrad umschlugen sind und somit durch einen zentralen Antriebsmotor synchron angetrieben sind.

Die Spindeltriebe sind zwar sowohl in Andrück- als auch in Gegenrichtung wirksam, das heißt bewegen den Andrückrahmen zum Torrahmen hin oder in Gegenrichtung, je nach Drehrichtung des Motors, doch ist es gemäß einer Weiterbildung vorteilhaft, die Spindeltriebe begrenzt beweglich im Andrückrahmen zu lagern und Federmittel vorzusehen, welche den Andrückrahmen entgegen der Andrückrichtung kraftbeaufschlagen. Dies können vorteilhaft Schraubenfedern sein, welche die jeweilige Spindel umgebend zwischen Antriebsrahmen und Spindelmutter angeordnet sind.

Insbesondere wenn der Antrieb der Andrückvorrichtung durch den Torblattantrieb indirekt über das Torblatt erfolgt, ist es von Vorteil, wenn die Andrückvorrichtung nicht in Öffnungsrichtung, sondern in Schließrichtung, das heißt in Andrückrichtung zum Torrahmen hin, federkraftbeaufschlagt ist. Hierzu sind geeignete Federmittel vorzusehen, beispielsweise Schraubenfedern im Bereich der Eckpunkte des Andrückrahmens, welche diesen mit einer Federvorspannkraft in Richtung zum Torrahmen hin kraftbeaufschlagen. Grundsätzlich können die Federmittel auch durch andere Federarten gebildet sein, wie beispielsweise pneumatische Federn, Drehstabfedern, Blattfedern oder dergleichen.

Um das Torblatt nicht während des gesamten Öffnungs- bzw. Schließvorgangs durch die Federkraft der Andrückvorrichtung zu belasten, ist gemäß einer vorteilhaften Weiterbildung der Erfindung eine Sperrmechanik vorgesehen, welche den Andrückrahmen mit Abstand zum Torrahmen hält und die vorzugsweise durch torblattseitige Steuerungsmittel betätigbar ist. Alternativ kann hierfür auch eine gesonderte Steuerung, beispielsweise ein Pneumatikzylinder oder ein elektrischer Aktuator vorgesehen sein. Zweckmäßigerweise ist die Sperrmechanik dabei so angeordnet und ausgebildet, dass sie den Andrückrahmen bis unmittelbar vor dem Schließen des Torblattes mit Abstand zum Torrahmen hält und erst dann deaktiviert wird, wenn das Torblatt seine Schließstellung erreicht hat. Eine solche Sperrmechanik kann vorteilhaft durch einen torrahmenseitig angeordneten zur Sperrstellung hin federkraftbeaufschlagten Sperrhebel gebildet sein, der durch ein torblattseitig angeordnetes Steuerelement aus seiner Sperrstellung bewegbar ist. Eine solche Anordnung ist konstruktiv einfach und arbeitet zuverlässig. Vorteilhaft sind dabei an beiden Vertikalseiten des Torrahmens Sperrhebel angeordnet, welche federvorgespannt sind und somit selbsttätig in die den Andrückrahmen mit Abstand zum Torrahmen haltende Sperrstellung gelangen, in welcher das Torblatt weitgehend reibungsfrei zwischen Andrückrahmen und Torrahmen bewegt werden kann. Torblattseitig sind vorteilhaft entsprechende Zapfen vorgesehen, welche seitlich aus dem Torblatt hervorspringen und so angeordnet sind, dass sie unmittelbar vor dem vollständigen Schließen des Torblatts die Hebel aus der Sperrstellung bewegen, so dass der Andrückrahmen federkraftgesteuert das Torblatt an den Torrahmen andrückt.

Das erfindungsgemäße Tor kann in besonders vorteilhafter Weise in einem Kühlraum oder einem Tiefkühlraum angeordnet sein, da es einerseits sehr schnell öffnet und schließt, andererseits jedoch abgedichtet schließt, wenn die Andrückvorrichtung aktiviert wird. Gleichzeitig oder alternativ kann das erfindungsgemäße Tor als Brandschutztor ausgebildet sein, also neben den besonderen für einen Kühlraum oder einen Tiefkühlraum erforderlichen Eigenschaften auch die Eigenschaften erfüllen, welche speziellen Brandschutzvorschriften genügen.

Die Erfindung ist nachfolgend anhand eines in den Zeichnungen dargestellten Ausführungsbeispiels dargestellt. Es zeigen:
- Fig. 1: in stark vereinfachter schematischer Darstellung eine teilweise im Schnitt dargestellte Seitenansicht einer ersten Ausführungsform eines erfindungsgemäßen Tores,
- Fig. 2: eine Vorderansicht des Tores gemäß Fig. 1,
- Fig. 3: in stark vergrößerter Darstellung die Einzelheit III in Fig. 1,
- Fig. 4: in stark vereinfachter schematischer Darstellung eine teilweise im Schnitt dargestellte Seitenansicht einer zweiten Ausführungsform eines erfindungsgemäßen Tores,
- Fig. 5: eine Vorderansicht des Tores gemäß Fig. 4,
- Fig. 6: in vergrößerter Darstellung eine Seitenansicht der Sperrmechanik in der Sperrstellung und
- Fig. 7: die Sperrmechanik gemäß Fig. 6 in freigegebener Stellung.

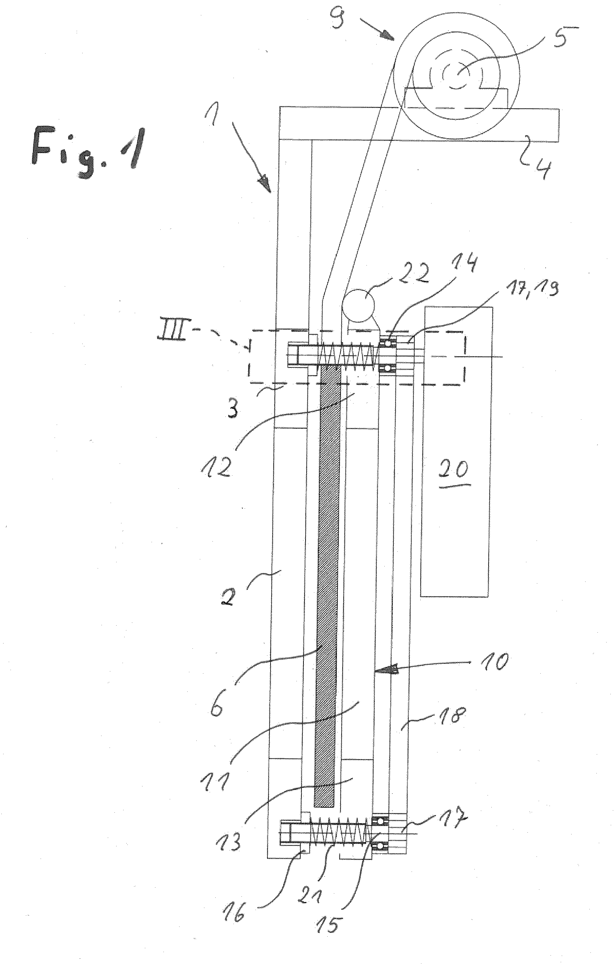

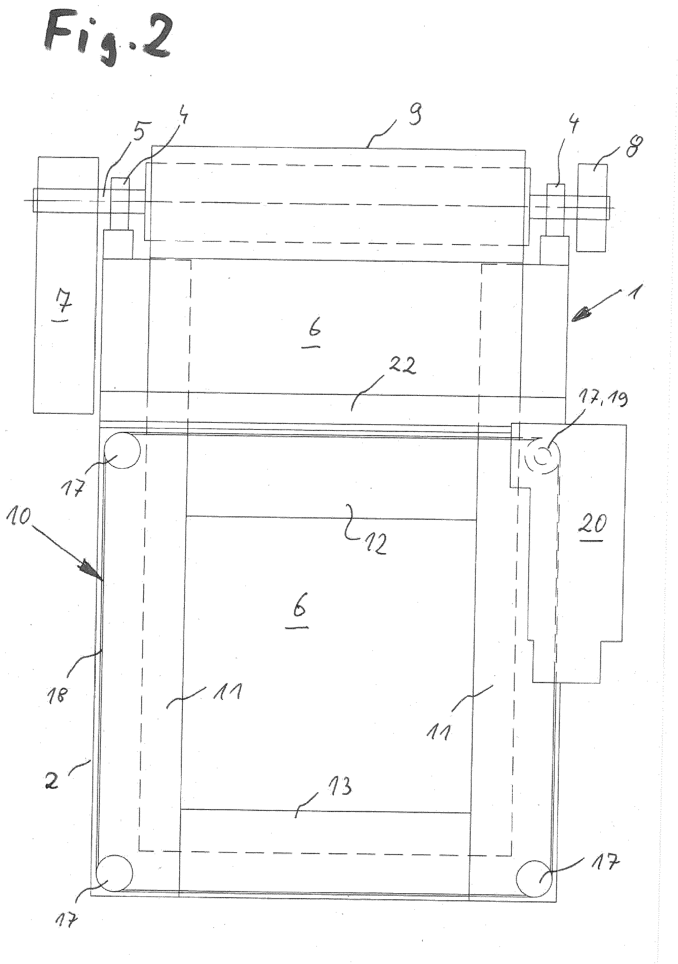

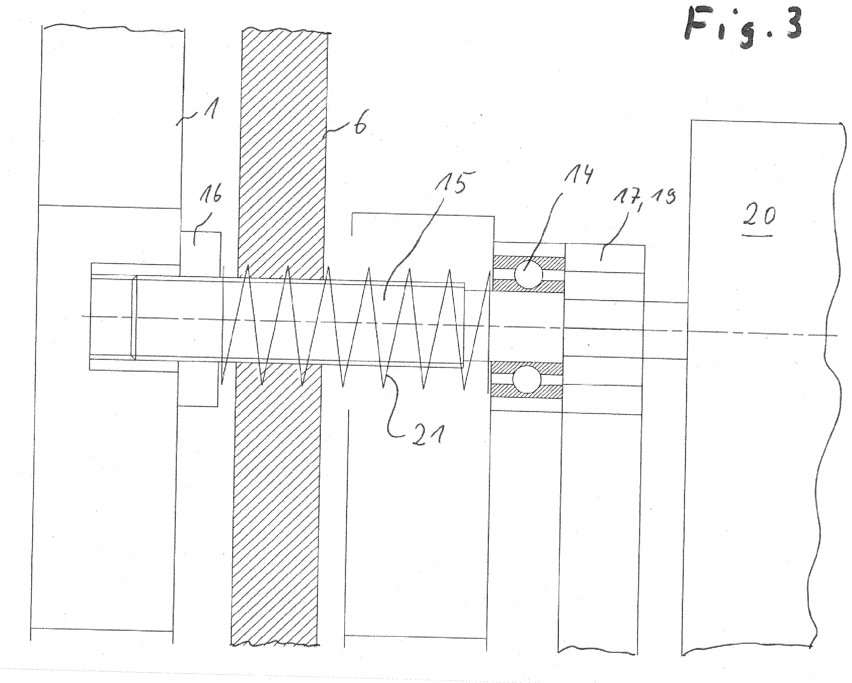

Das in den Figuren 1 - 3 dargestellte Schnelllaufrolltor weist einen Torrahmen 1 auf, welcher eine hier nicht im Einzelnen dargestellte Toröffnung in einer Wand eines mit dem Tor abzuschließenden Raumes nach außen hin abschließt und umfänglich einfasst. Der hier im Einzelnen dargestellte Torrahmen 1 kann auch durch die Toröffnung selbst gebildet sein, wenn die entsprechenden Bauteile dort direkt angebracht oder gebildet sind.

Der Torrahmen 1 weist zwei vertikal angeordnete, die Toröffnung seitlich begrenzende Rahmenteile 2 auf, welche an der Oberseite durch einen sturzähnlichen Träger 3 miteinander verbunden sind und die zusammen das Lichtraumprofil der Öffnung bestimmen. An die vertikalen Rahmenteile 2 schließen sich senkrecht dazu angeordnete, in den Freiraum vor dem Tor ragende Träger 4 an, zwischen denen eine Welle 5 gelagert ist, auf welcher ein Torblatt 6 auf- bzw. abwickelbar ist. Hierzu ist an einem Ende der Welle 5 jenseits des Trägers 4 ein Antrieb 7 vorgesehen, der hier nicht im Einzelnen beschrieben ist, ebenso an der anderen Seite eine Bremseinrichtung 8, welche sicherstellt, dass bei Ausfall des Antriebs die Welle 5 des Torblattwickels 9 festgesetzt ist.

Das Torblatt 6 besteht aus einem flexiblen Material, ist flächig ausgebildet und weist eine Breite auf, welche die vertikalen Rahmenteile 2 des Torrahmens 1 ein Stück überdeckt. Durch entsprechende Betätigung des Antriebs 7 kann der Torblattwickel 9 abgewickelt werden, so dass das Torblatt 6 die Toröffnung verschließend vor dem Torrahmen 1 angeordnet ist, so wie dies in Fig. 1 dargestellt ist. Dies ist die Schließstellung des Tores. Durch Betätigung des Antriebs 7 in Gegenrichtung kann das Torblatt 6 aus der in Fig. 1 dargestellten geschlossenen Stellung nach oben gezogen und auf den Torblattwickel 9 aufgewickelt werden, in der die Öffnung des Torrahmens 1 freigegeben ist, dies ist die geöffnete Stellung.

Um das Torblatt 6 in seiner Schließstellung zum Torrahmen 1 hin andrücken und damit kraftschlüssig an diesen anlegen zu können, ist eine Andrückvorrichtung vorgesehen. Die Andrückvorrichtung weist einen rechteckigen Andrückrahmen 10 auf, der mit Abstand zum Torrahmen 1 in Richtung auf diesem zu und von diesem weg bewegbar, im Übrigen aber fest angeordnet ist. Dieser Andrückrahmen 10 ist fluchtend zum Torrahmen 1 angeordnet und überdeckt bzw. umgibt die im Torrahmen 1 gebildete Toröffnung mit Abstand derart, dass das Torblatt 6 in der Schließstellung seitlich von zwei vertikalen Abschnitten 11 und an der Ober- und Unterseite des Rahmens 10 durch zwei horizontale Abschnitte 12 und 13 überdeckt wird.

Der Andrückrahmen 10 ist in seinen Eckbereichen mit Lagern 14 versehen, in denen Spindeln 15 drehbar angeordnet sind, die in torrahmenseitig fluchtend zu den Spindeln 15 angeordneten Spindelmuttern 16 eingreifen und zusammen mit diesen Spindeltriebe bilden. Am anderen, in Fig. 1 äußeren und rechten Ende der Spindeln 15 sind Stirnräder 17 drehfest auf den Spindeln 15 angeordnet, die durch einen umlaufenden Zahnriemen 18 miteinander und mit einem Stirnrad 19 eine elektrische Antriebseinrichtung 20 bewegungsgekoppelt sind. Die elektrische Antriebseinrichtung 20 ist an dem Andrückrahmen 10 befestigt und durch eine zentrale Steuerung angesteuert, welche den Schließ- und Öffnungsvorgang des Tores steuert. In der dargestellten Ausführung treibt die Antriebseinrichtung 20 eine Spindel 15 direkt an, sie kann jedoch auch an anderer Stelle mittels ihrer Stirnräder 9 in den Zahnriemen 18 antreibend eingreifen.

Der Andrückrahmen 10 ist mit axialem Spiel über die Spindeln 15 gelagert. Die Spindeln 15 sind jeweils von einer Schraubenfeder 21 umgeben, die zwischen der Spindelmutter 16 und der zum Torrahmen 1 weisenden Seite des Andrückrahmens 10 vorgespannt angeordnet ist, derart, dass die Federn 21 eine Rückstellkraft in Rückstell- bzw. Öffnungsrichtung auf den Andrückrahmen ausüben.

Damit das Torblatt 6 unabhängig von der Wickelstellung und damit der Dicke des Torblattwickels 9 stets im Bereich des Torrahmens 1 parallel zu diesem verläuft, ist an der Oberseite des Andrückrahmens 10 eine Führungsrolle 22 frei drehbar gelagert, welche das Torblatt von dem Torblattwickel 9 an den Torrahmen 1 heranführt.

Die Funktion des vorbeschriebenen Tors ist wie folgt. Ausgehend von einer geöffneten Stellung, in welcher das Torblatt 6 mit seiner Unterseite etwa im Bereich der Führungsrolle 22 angeordnet ist und im Übrigen auf dem Torblattwickel 9 aufgerollt ist, wird zum Schließen des Tores der Antrieb 7 in Schließrichtung aktiviert, wodurch die den Torblattwickel tragende Welle 5 in Abwickelrichtung bewegt wird, bis das Torblatt in seiner den Torrahmen 1 nach außen, also in Fig. 1 zur rechten Seite hin abschließenden Stellung befindlich ist, in welcher die vertikalen Rahmenteile 2 und die diese quer verbindenden Bauteile an der Unterseite und an der Oberseite vom Torblatt 6 überdeckt sind. In dieser Stellung (Schließstellung) wird die elektrische Antriebseinrichtung 20 aktiviert, derart, dass die vier in den Eckbereichen des Andrückrahmens 10 drehbar gelagerten Spindeln 15 synchron angetrieben werden, so dass sich diese in die Spindelmuttern 16 eindrehen und dabei den Andrückrahmen 10 in Richtung zum Torrahmen 1 bewegen, bis dieser unter Einschluss der seitlichen Torblatteile, des unteren Endes sowie eines oberen Querabschnitts am Torrahmen 1 anliegen und bei weiterer Antriebsansteuerung kraftbeaufschlagt an diesem Rahmen 1 anliegen und somit das Torblatt 6 gegenüber dem Torrahmen 1 abdichten. In dieser Stellung ist das Tor nicht nur geschlossen, sondern auch abgedichtet.

Zum nachfolgenden Öffnen wird zunächst die elektrische Antriebseinrichtung 20 in Gegenrichtung angesteuert, wodurch die Spindeln 15 in Gegenrichtung drehen, der Andrückrahmen 10 somit vom Torrahmen 1 wegbewegt wird. dabei sorgen die Schraubenfedern 21 dafür, dass sich die erforderlichen Rückstellkräfte einstellen.

Sobald der Andrückrahmen 10 so weit vom Torrahmen 1 entfernt ist, dass das Torblatt 6 zwischen Torrahmen 1 und Andrückrahmen 10 frei beweglich ist, wird wiederrum der Antrieb 7, diesmal in Gegenrichtung, aktiviert, wonach das Torblatt 6 aufgewickelt wird, bis sich das Ende des Torblatts 6 im Bereich des oberen Querabschnitts des Andrückrahmens 10 bzw. des oberen horizontalen Rahmenteils 3 des Torrahmens 1 befindet.

Bei der vorstehend dargestellten und beschriebenen Ausführungsform ist der Andrückrahmen 10 geschlossen ausgebildet, was hinsichtlich der dadurch gebildeten Andrückkräfte und der Dichtheit des Torblattes 6 gegenüber dem Torrahmen 1 besonders vorteilhaft ist. Dies bedingt jedoch, dass sowohl der Andrückrahmen 10 als auch der Torrahme 1n einen unteren horizontalen Träger aufweisen. Diese sind entweder, wenn das Tor zum Durchfahren geeignet sein soll, in den Boden zu integrieren oder aber der Andrückrahmen ist u-förmig auszugestalten, das heißt ohne den unteren horizontalen Abschnitt 13 auszugestalten. Der Zahnriemen 18 ist dann entsprechend u-förmig zu führen, da die untere Querverbindung entfällt. Dann entfällt auch der untere horizontale Rahmenteil des Torrahmens. In Schließstellung wird das Torblatt 3 dann nur an drei Seiten fixiert, bodenseitig liegt es dichtend lediglich auf.

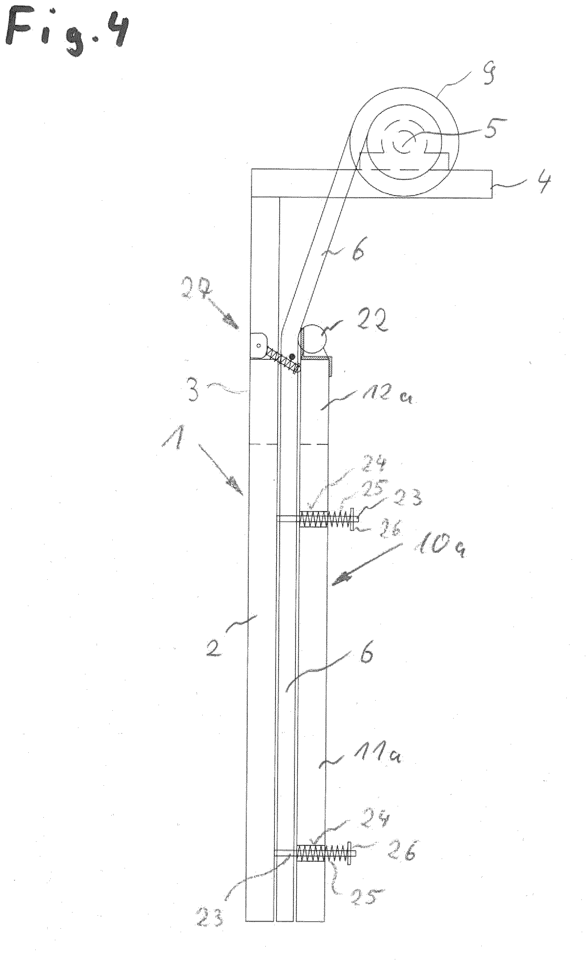

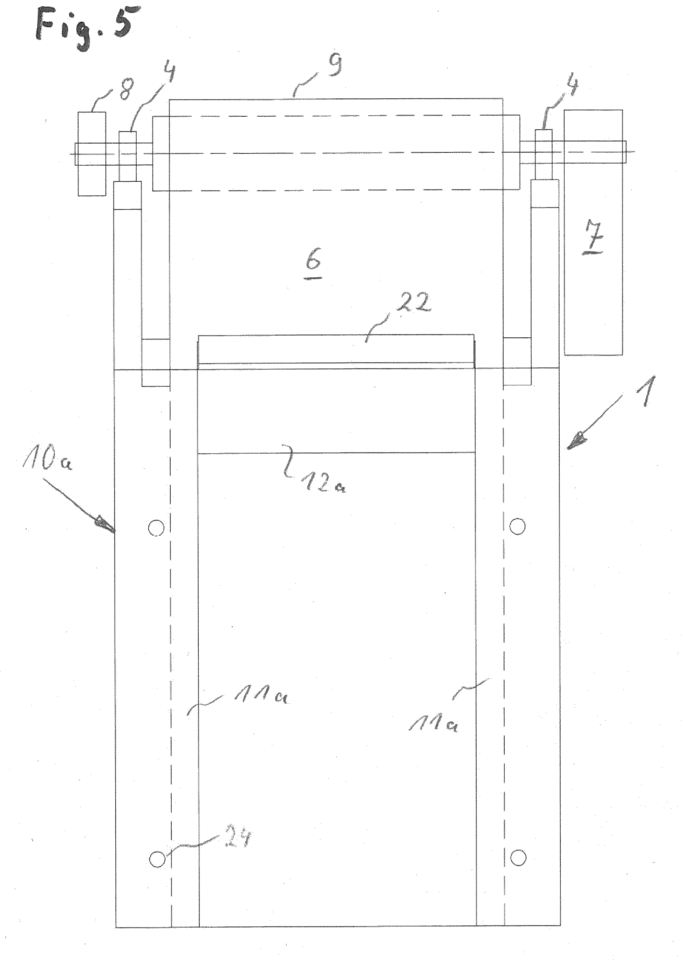

Bei der anhand der Figuren 4 bis 7 beschriebenen Ausführungsvariante ist der grundsätzliche Aufbau des Tores identisch, das heißt ein Torrahmen 1 mit vertikalen Rahmenteilen 2 und einem horizontalen Träger 3 weist zwei horizontal in dem Raum ragende Träger 4 auf, welche eine Welle 5 zum Aufwickeln eines Torblatts 6 tragen. An einer Seite der Welle 5 ist ein Antrieb 7 angeordnet, an der anderen Seite eine Bremseinrichtung 8. Das den Torrahmen 1 verschließende Torblatt 6 ist in geöffneter Stellung auf der Welle 5 zu einem Torblattwickel 9 aufgewickelt. In der geschlossenen Stellung, in welcher das Torblatt 6 den Torrahmen 1 verschließt, kann dieses durch einen Andrückrahmen 10a an den Torrahmen 1 angedrückt werden, um eine dichte Anlage zu gewährleisten.

Der Andrückrahmen 10a ist in gleicher Weise aufgebaut wie der vorbeschriebene, er weist vertikale Abschnitte 11a und eine diese an der Oberseite verbindenden horizontalen Abschnitt 12a auf und kann in Richtung zum Torrahmen 1 hin und von diesem wegbewegt werden. Hierzu sind insgesamt vier im Wesentlichen in den Eckbereichen des Andrückrahmens 10a torrahmenseitig angebrachte Bolzen 23 vorgesehen, welche durch im Andrückrahmen 10a vorgesehene Bohrungen 24 geführt sind. Die Bolzen 23 sind von Schraubenfedern 25 umgeben, die mit der einen Seite am Andrückrahmen 10a anliegen und deren andere Seite an einer Scheibe 26 anliegt, welche am freien Ende des jeweiligen Bolzens 23 befestigt ist. Die Federn 25 sind vorgespannt, so dass auf den Andrückrahmen 10a ihre Federkraft wirkt.

Bei dieser Ausführung wird die Andrückkraft des Andrückrahmens 10a durch die Federkraft der Schraubenfedern 25 gebildet. Hier ist somit ein Antrieb erforderlich, welcher den Andrückrahmen 10a vom Torrahmen 1 wegbewegt, um das Torblatt 6 zwischen Andrückrahmen 10a und Torrahmen 1 frei bewegen zu können. Die hierfür erforderliche Antriebsmechanik ist durch den Antrieb 7 der Welle 5 über den Torblattwickel 9 zum Torblatt 6 gebildet.

Das Torblatt ist, wie insbesondere Figur 4 zeigt, an der Oberseite des Andrückrahmens 10a über die Führungsrolle 22 geführt. Da der Torblattwickel 9 nicht nur oberhalb des Andrückrahmens 10a sitzt, sondern auch noch mit senkrechtem Abstand dazu, und zwar in Richtung vom Torrahmen 1 weg, ergibt sich beim Aufwickeln des Torblatts 6 eine Kraftkomponente an der Führungsrolle 22, die vom Torrahmen 1 weg, also in Gegenrichtung zur Andrückrichtung der Schraubenfedern 25 gerichtet ist, neben der nach oben gerichteten Komponente zum Hochziehen des Torblatts 6. Diese Kraftkomponente wird bei dieser Ausführung genutzt um den Andrückrahmen 10a entgegen der Kraft der Schraubenfedern 25 in Richtung vom Torrahmen 1 wegzubewegen.

Da diese Kraftkomponente nur beim Öffnen zur Verfügung steht und mit zunehmendem Öffnungsgrad abnimmt, ist eine Sperrmechanik 27 zwischen Torrahmen 1 und Andrückrahmen 10a vorgesehen. Diese Sperrmechanik besteht aus zwei seitlich des Torblatts 6 am Torrahmen 1 schwenkbar angeordneten Sperrhebeln 28 und zwei seitlich am Torblatt 6 herausragenden Zapfen 29, die mit diesen Sperrhebeln 28 in Wirkverbindung treten können.

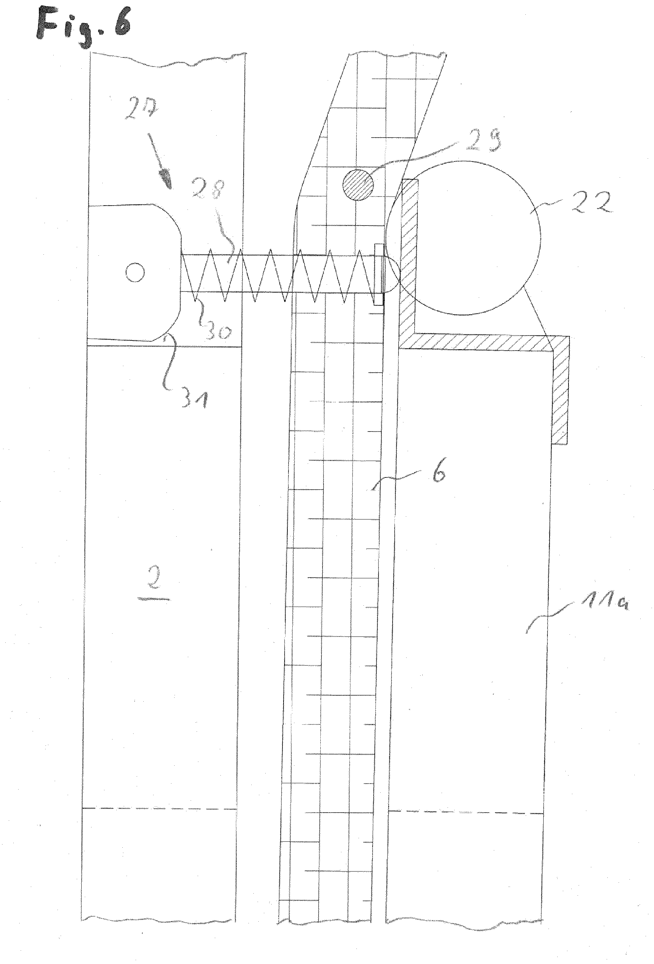

Die Sperrhebel 28 sind nicht nur schwenkbar torrahmenseitig angeordnet, sondern über eine diese umgebende Schraubenfeder 30 in Richtung ihrer Sperrstellung vorgespannt. Jede Schraubenfeder ist einerseits am Ende des jeweiligen Sperrhebels abgestützt und liegt andererseits an einer Kulisse 31 an, die so gestaltet ist, dass jeder Sperrhebel 28 durch die Druckkraft der Schraubenfeder 30 selbsttätig in seine im Wesentlichen horizontale Sperrstellung verbracht wird, die in Figur 6 dargestellt ist. In dieser Stellung stützt das freie Hebelende den Andrückrahmen 10a so weit ab, dass das Torblatt 6 mit Spiel zwischen dem Andrückrahmen 10a und dem Torrahmen 1 verfahrbar ist. Diese in Figur 6 dargestellte Stellung dient im Wesentlichen zum reibungsarmen Öffnen und Schließen des Tores. Da der Andrückrahmen 10a durch die Bolzen 23 geführt ist und sich nur linear bewegen kann, sperren die beidseitig des Torblatts 6 angeordneten Sperrhebel 28 den zwischen Torrahmen 1 und Andrückrahmen 10a gebildeten Freiraum über die gesamte Fläche des Rahmens.

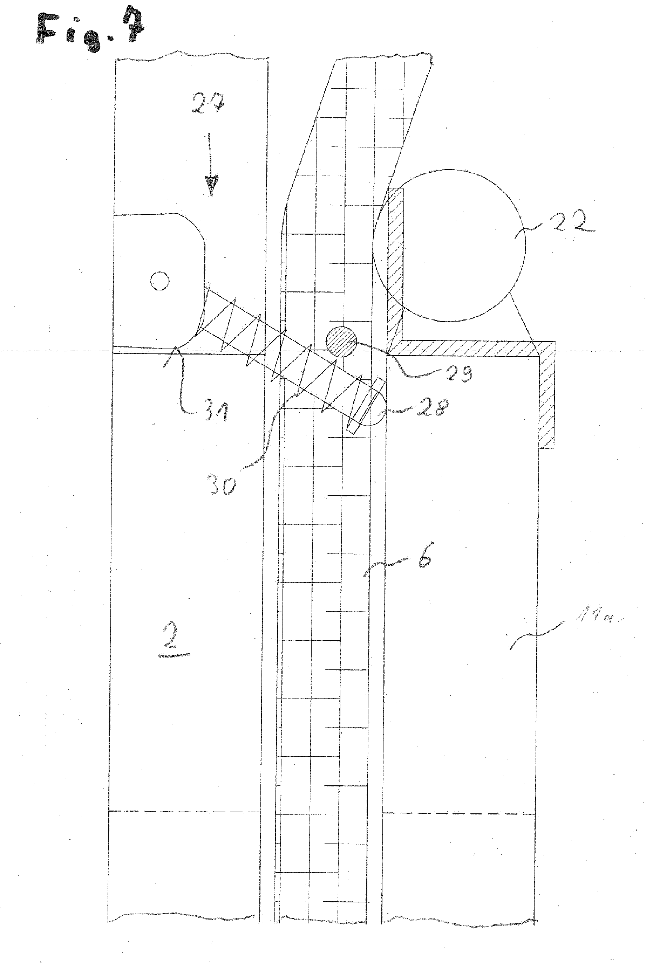

Die Zapfen 29 sind so am Torblatt 6 angerodnet, dass diese beim Schließen des Torblatts 6, also beim Abwickeln des Torblatts 6 in seine Schließstellung, dann mit den Sperrhebeln 28 kollidieren, wenn das untere Ende des Torblatts 6 nahezu die verschließende Endstellung erreicht hat. Dann werden durch die Zapfen 29 die Sperrhebel 28 entgegen der Federkraft der Schraubenfedern 30 nach unten in die in Figur 7 dargestellte Stellung verschwenkt, in welcher die Sperrwirkung aufgehoben ist und der Andrückrahmen 10a durch die Kraft der Schraubenfedern 25 angedrückt wird.

In umgekehrter Richtung zum Öffnen wird der Antrieb 7 aktiviert, wodurch die Welle 5 mit dem teilweise darauf aufgewickelten Torblatt 6 in Öffnungsrichtung ein Drehmoment ausübt, welches in Form einer Zugkraft auf das Torblatt 6 übertragen wird. An der Führungsrolle 22 entsteht dadurch auch eine in horizontaler Richtung wirkende Kraftkomponente, welche den Andrückrahmen 10a aus der Andrückstellung in die geöffnete beabstandete Stellung zieht, in welcher das Torblatt 6 frei verfahrbar ist. In dieser Stellung schwenken die Sperrhebel 28 durch die Federkraft der Schraubenfedern 30 selbsttätig wieder in die in Figur 6 dargestellte Sperrstellung, in welcher die Andrückmechanik der Schraubenfedern 25 blockiert ist, sobald das Torblatt so weit nach oben gezogen ist, dass die Zapfen 29 die Sperrhebel 28 freigeben.

In dem dargestellten Ausführungsbeispiel ist der Andrückrahmen 10a nur linear verfahrbar. Statt der linearen Verfahrbarkeit kann an der Unterseite des Rahmens, vorzugsweise unterhalb des Bodens der Andrückrahmen 10a schwenkbar angelenkt sein, dann können die Führungen zwischen den Bolzen 23 und den Bohrungen 24 spielbehaftet sein.

### Bezugszeichenliste

- 1: Torrahmen
- 2: vertikale Rahmenteile
- 3: horizontale Träger des Torrahmens
- 4: horizontaler in den Raum ragende Träger des Torrahmens
- 5: Welle
- 6: Torblatt
- 7: Antrieb
- 8: Bremseinrichtung
- 9: Torblattwickel
- 10, 10a: Andrückrahmen
- 11, 11a: vertikale Abschnitte des Andrückrahmens
- 12, 12a: horizontaler oberer Abschnitt des Andrückrahmens
- 13: horizontaler unterer Abschnitt des Andrückrahmens
- 14: Lager im Andrückrahmen
- 15: Spindeln
- 16: Spindelmuttern im Torrahmen
- 17: Stirnräder am Ende der Spindeln 15
- 18: umlaufender Zahnriemen
- 19: Stirnrad der elektrischen Antriebseinrichtung
- 20: elektrische Antriebseinrichtung
- 21: Schraubenfedern
- 22: Führungsrolle
- 23: Bolzen
- 24: Bohrungen
- 25: Schraubenfedern
- 26: Scheiben
- 27: Sperrmechanik
- 28: Sperrbalken
- 29: Zapfen
- 30: Schraubenfeder
- 31: Kulisse

## Patentansprüche

1. Tor, insbesondere Schnelllaufrolltor, mit einem flexiblen Torblatt (6) mit vertikaler Laufrichtung zum Verschließen einer durch einen Torrahmen (1) begrenzten Toröffnung, mit einem Antrieb (7) zum Öffnen und Schließen des Tores, mit einer Andrückvorrichtung, mit welcher das Torblatt (6) in seiner Schließstellung zum Torrahmen (1) hin andrückbar ist, wobei die Andrückvorrichtung einen Andrückrahmen (10) aufweist, welcher das Torblatt (6) in seiner Schließstellung mindestens an Abschnitten der beiden vertikal verlaufenden Seitenbereiche des Torblatts (6) überdeckt, **dadurch gekennzeichnet, dass** der Andrückrahmen (10) an seiner Oberseite eine drehbar gelagerte Führungsrolle (22) zur Umlenkung des Torblatts (6) aufweist und ein Torblattwickel (9) oberhalb der Führungsrolle (22) vorgesehen ist, derart, dass beim Drehen des Torblattwickels (9) in Aufwickelrichtung eine Querkraft in Richtung vom Torrahmen (1) weg auf die Führungsrolle (2) ausgeübt wird.

2. Tor nach Anspruch 1, **dadurch gekennzeichnet, dass** Antriebsmittel (20) vorgesehen sind, mit welchen der Andrückrahmen (10) in Richtung zum Torrahmen (1) und/oder in Gegenrichtung bewegbar und kraftbeaufschlagbar ist.

3. Tor nach Anspruch 1 oder 2, **dadurch gekennzeichnet, dass** der Andrückrahmen (10) mindestens einen horizontalen Abschnitt (12) aufweist, welcher zwei vertikal verlaufende Abschnitte (11) oben verbindet und dass der Andrückrahmen (10) um eine bodennahe Achse schwenkbar oder linear bewegbar gelagert ist.

4. Tor nach einem der vorhergehenden Ansprüche, **dadurch gekennzeichnet, dass** der Andrückrahmen (10) an der Unterseite offen ausgebildet ist.

5. Tor nach einem der vorhergehenden Ansprüche, **dadurch gekennzeichnet, dass** der Andrückrahmen (10) mittels eines Spindeltriebs (15, 16) zum Torrahmen (1) hin bewegbar und kraftbeaufschlagbar ist.

6. Tor nach einem der vorhergehenden Ansprüche, **dadurch gekennzeichnet, dass** mindestens zwei, vorzugsweise vier Spindeltriebe (15, 16) vorzugsweise in den Eckbereichen des Andrückrahmens (10) angeordnet sind, welche synchron angetrieben sind.

7. Tor nach einem der vorhergehenden Ansprüche, **dadurch gekennzeichnet, dass** die Antriebsspindeln (15) drehbar im Rahmen (10) gelagert sind und in Spindelmuttern (16) eingreifen, die torrahmenseitig angeordnet sind und dass die Antriebsspindeln (15) vorzugsweise mit einem zentralen außen am Andrückrahmen (10) vorgesehenen Antriebsmotor (20) antriebsverbunden sind.

8. Tor nach einem der vorhergehenden Ansprüche, **dadurch gekennzeichnet, dass** ein Zahnriementrieb (17, 18, 19) vorgesehen ist, welcherden Antriebsmotor (20) mit den Spindeltrieben (15, 16) antriebsverbildet.

9. Tor nach einem der vorhergehenden Ansprüche, **dadurch gekennzeichnet, dass** die Spindeltriebe (15, 16) begrenzt beweglich im Andrückrahmen (10) gelagert sind und dass Federmittel (21) vorgesehen sind, welche den Andrückrahmen (10) entgegen der Andrückrichtung kraftbeaufschlagen.

10. Tor nach einem der vorhergehenden Ansprüche, **dadurch gekennzeichnet, dass** eine Schraubenfeder (21) vorgesehen ist, welche eine Antriebsspindel (15) umgibt und zwischen Torrahmen (1) und Andrückrahmen (10) kraftwirksam ist.

11. Tor nach einem der vorhergehenden Ansprüche, **dadurch gekennzeichnet, dass** Federmittel (25) vorgesehen sind, welche den Andrückrahmen (10) in Richtung zum Torrahmen (1) hin kraftbeaufschlagen und andrücken.

12. Tor nach einem der vorhergehenden Ansprüche, **dadurch gekennzeichnet, dass** eine Sperrmechanik (27) vorgesehen ist, welche den Andrückrahmen (10) mit Abstand zum Torrahmen (1) hält und die vorzugsweise durch torblattseitige Steuerungsmittel (29) betätigbar ist.

13. Tor nach einem der vorhergehenden Ansprüche, **dadurch gekennzeichnet, dass** die Sperrmechanik (27) mindestens einen torrahmenseitig angeordneten zur Sperrstellung federkraftbeaufschlagten Sperrhebel (28) aufweist, der durch ein torblattseitig angeordnetes vorzugsweise als Zapfen (29) ausgebildetes Steuerelement aus seiner Sperrstellung bewegbar ist.

14. Tor nach einem der vorhergehenden Ansprüche, **dadurch gekennzeichnet, dass** es isolierend zum Einsatz in einem Kühlraum oder Tiefkühlraum und/oder als Brandschutztor ausgebildet ist und vorzugsweise ein segmentiertes und/oder textiles Torblatt (6) aufweist, welches oberhalb des Torrahmens (1) außen zu einem Torblattwickel (9) aufwickelbar ist.

## Claims

1. Door, in particular a quick-action roller door, with a flexible door leaf (6) with a vertical running direction for purposes of closing a door opening bounded by a door frame (1), with a drive (7) for purposes of opening and closing the door, with a pressure application device with which the door leaf (6) can be pressed against the door frame (1) in its closed position, wherein the pressure application device has a pressure application frame (10), which covers the door leaf (6) in its closed position, at least on sections of the two vertically extending side regions of the door leaf (6), **characterised in that**, the pressure application frame (10) has a rotatably mounted guide roller (22) on its upper side for purposes of deflection of the door leaf (6), and a door leaf winder (9) is provided above the guide roller (22) such that when the door leaf winder (9) is rotated in the winding direction, a transverse force is exerted on the guide roller (2) in the direction away from the door frame (1).

2. Door according to Claim 1, **characterised in that**, drive means (20) are provided, with which the pressure application frame (10) can be moved in the direction of the door frame (1), and/or in the opposite direction, and can be subjected to force.

3. Door according to Claim 1 or 2, **characterised in that**, the pressure application frame (10) has at least one horizontal section (12), which connects two vertically-extending sections (11) at the top, and **in that**, the pressure application frame (10) is mounted such that it can be pivoted about an axis close to the floor, or can be linearly moved.

4. Door according to one of the preceding claims, **characterised in that**, the pressure application frame (10) is of open design on the lower side.

5. Door according to one of the preceding claims, **characterised in that**, the pressure application frame (10) can be moved towards the door frame (1) by means of a spindle drive (15, 16), and can be subjected to force.

6. Door according to one of the preceding claims, **characterised in that**, at least two, preferably four, spindle drives (15, 16), which are driven synchronously, are preferably arranged in the corner regions of the pressure application frame (10).

7. Door according to one of the preceding claims, **characterised in that**, the drive spindles (15) are rotatably mounted in the frame (10) and engage with spindle nuts (16), which are arranged on the sides of the door frame, and **in that**, the drive spindles (15) are preferably connected to a central drive motor (20) provided on the exterior of the pressure application frame (10).

8. Door according to one of the preceding claims, **characterised in that**, a toothed belt drive (17, 18, 19) is provided, which connects the drive motor (20) to the spindle drives (15, 16).

9. Door according to one of the preceding claims, **characterised in that**, the spindle drives (15, 16) are mounted with limited movement in the pressure application frame (10), and **in that**, spring means (21) are provided, which apply force to the pressure application frame (10) against the direction of pressure application.

10. Door according to one of the preceding claims, **characterised in that**, a helical spring (21) is provided, which surrounds a drive spindle (15) and exerts a force between the door frame (1) and the pressure application frame (10).

11. Door according to one of the preceding claims, **characterised in that**, spring means (25) are provided, which apply force to the pressure application frame (10) in the direction of the door frame (1) and press against the latter.

12. Door according to one of the preceding claims, **characterised in that**, a locking mechanism (27) is provided, which holds the pressure application frame (10) at a distance from the door frame (1), and which can preferably be actuated by control means (29) on the side of the door leaf.

13. Door according to one of the preceding claims, **characterised in that**, the locking mechanism (27) has at least one locking lever (28) arranged on the side of the door frame and spring-loaded towards the locking position, which can be moved out of its locking position by a control element preferably in the form of a pin (29) arranged on the side of the door leaf.

14. Door according to one of the preceding claims, **characterised in that**, it is designed for use in the insulation of a cold storage room or a deep-freeze storage room, and/or as a fire protection door, and preferably has a segmented and/or a textile door leaf (6), which can be wound up above the door frame (1) onto an exterior door leaf winder (9).

## Revendications

1. Portail, notamment portail roulant rapide, pourvu d'un tablier (6) de portail souple, à sens de déplacement vertical, destiné à fermer une ouverture de portail délimitée par un cadre (1) de portail (1), pourvu d'un entraînement (7), destiné à ouvrir et à fermer le portail, pourvu d'un dispositif d'appui, à l'aide duquel, dans sa position de fermeture, le tablier (6) de portail peut être appuyé contre le cadre (1) de portail (1), le dispositif d'appui comportant un cadre d'appui (10), lequel recouvre le tablier (6) de portail dans sa position de fermeture au moins sur des sections des deux zones latérales s'écoulant à la verticale du tablier de fermeture (6), **caractérisé en ce que** sur sa face supérieure, le cadre d'appui (10) comporte un galet de guidage (22) logé de manière rotative, destiné à faire dévier le tablier de fermeture (6) et **en ce qu'**un enroulement (9) de tablier de portail est prévu au-dessus du galet de guidage (22), de telle sorte que lors d'une rotation de l'enroulement (9) de tablier de portail dans une direction d'enroulement, une force transversale éloignement de la direction du cadre (1) de portail (1) soit exercée sur le galet de guidage (2).

2. Portail selon la revendication 1, **caractérisé en ce que** des moyens d'entraînement (20) sont prévus, à l'aide desquels le cadre d'appui (10) est déplaçable et susceptible d'être exposé à une pression dans la direction du cadre (1) de portail (1) et / ou dans la direction opposée.

3. Portail selon la revendication 1 ou 2, **caractérisé en ce que** le cadre d'appui (10) comporte au moins un segment (12) horizontal, lequel relie par le haut deux segments (11) s'écoulant à la verticale et **en ce que** le cadre d'appui (10) est logé en étant susceptible de pivoter ou d'être déplacé de manière linéaire autour d'un axe proche du sol.

4. Portail selon l'une quelconque des revendications précédentes, **caractérisé en ce que**, sur sa face inférieure, le cadre d'appui (10) est conçu en étant ouvert.

5. Portail selon l'une quelconque des revendications précédentes, **caractérisé en ce que** le cadre d'appui (10) est susceptible d'être déplacé et soumis à une force vers le cadre (1) de portail (1) au moyen d'un mécanisme à broche (15, 16).

6. Portail selon l'une quelconque des revendications précédentes, **caractérisé en ce qu'**au moins deux, de préférence quatre mécanismes à broche (15, 16), qui sont entraînés de manière synchrone sont placés de préférence dans les zones d'angle du cadre d'appui (10).

7. Portail selon l'une quelconque des revendications précédentes, **caractérisé en ce que** les broches d'entraînement (15) sont logées en étant rotatives dans le cadre (10) et s'engagent dans des écrous de broche (16) qui sont placés du côté du cadre de portail et **en ce que** le broches d'entraînement (15) sont reliées en entraînement, de préférence avec un moteur d'entraînement (20) prévu de manière centrale à l'extérieur sur le cadre d'appui (10).

8. Portail selon l'une quelconque des revendications précédentes, **caractérisé en ce qu'**il est prévu une transmission à courroie crantée (17, 18, 19), laquelle relie en entraînement le moteur d'entraînement (20) avec les mécanismes à broche (15, 16).

9. Portail selon l'une quelconque des revendications précédentes, **caractérisé en ce que** les mécanismes à broche (15, 16) sont logés en étant déplaçables de manière limitée dans le cadre d'appui (10) ou **en ce que** des moyens à ressort (21) sont prévus, lesquels exposent à une force le cadre d'appui (10) à l'encontre de la direction d'appui.

10. Portail selon l'une quelconque des revendications précédentes, **caractérisé en ce qu'**il est prévu une vis hélicoïdale (21), laquelle entoure une broche d'entraînement (15) et est efficace en force entre le cadre (1) de portail (1) et le cadre d'appui (10).

11. Portail selon l'une quelconque des revendications précédentes, **caractérisé en ce que** des moyens à ressort (25) sont prévus, qui soumettent à une force et appuient le cadre d'appui (10) dans la direction du cadre (1) de portail (1).

12. Portail selon l'une quelconque des revendications précédentes, **caractérisé en ce qu'**il est prévu un mécanisme de verrouillage (27) qui maintient le cadre d'appui (10) avec un écart par rapport au cadre (1) de portail (1) et qui est susceptible d'être actionnée de préférence par des moyens de commande (29) placés du côté du tablier de portail.

13. Portail selon l'une quelconque des revendications précédentes, **caractérisé en ce que** le mécanisme de verrouillage (27) comporte au moins un levier de verrouillage (28), placé du côté du cadre de portail, exposé à une force pour la position de verrouillage, qui par un élément de commande, placé du côté du tablier de portail, conçu de préférence sous la forme d'un tenon (29) est déplaçable à partir de sa position de verrouillage.

14. Portail selon l'une quelconque des revendications précédentes, **caractérisé en ce qu'**il est conçu en version isolante, pour être utilisé dans une chambre froide ou dans une chambre de congélation et / ou en tant que portail coupe-feu et comporte de préférence un tablier (6) de portail segmenté et / ou textile, lequel est susceptible d'être enroulé au-dessus du cadre (1) de portail (1) à l'extérieur en un enroulement (9) de tablier de portail.
